# EUROPÄISCHE PATENTSCHRIFT

(11) **EP 4 416 399 B1**
(45) Veröffentlichungstag und Bekanntmachung des Hinweises auf die Patenterteilung: **06.08.2025**
(21) Anmeldenummer: 22790313.5
(22) Anmeldetag: 22.09.2022
(51) Int. Cl.: F16B 39/24, F16B 39/32, F16B 39/34, F16B 21/18, F16B 31/02, F16B 43/00

(54) **RASTMUTTER MIT SICHERUNGSELEMENT**
LOCKING NUT COMPRISING A SECURING ELEMENT
CONTRE-ÉCROU COMPRENANT UN ÉLÉMENT DE SÉCURITÉ

(30) Priorität: 15.10.2021 DE 202021105659 U
(43) Veröffentlichungstag der Anmeldung: 21.08.2024
(73) Patentinhaber: SF Handels- und Besitzgesellschaft mbH, 78554 Aldingen (DE)
(72) Erfinder: FLAIG, Hartmut, 78554 Aldingen (DE); MÜLLER, Jürgen, 78606 Seitingen-Oberflacht (DE)
(74) Vertreter: Patent- und Rechtsanwälte Behrmann Wagner PartG mbB
(86) Internationale Anmeldenummer: PCT/EP2022/076324
(87) Internationale Veröffentlichungsnummer: WO 2023/061716

(56) Entgegenhaltungen:
- CN-A- 105 257 670
- CN-Y- 2 646 463
- US-A- 4 824 303

## Beschreibung

Die vorliegende Erfindung betrifft eine Rastmutter mit Sicherungselement nach dem Oberbegriff des Anspruchs 1.

Zur axialen Sicherung von Aufsatzelementen einer Welle, zum Beispiel einer Radnabe mit Radlager auf einem Antriebswellengelenk eines Kraftfahrzeuges, kann gegen unbeabsichtigtes Lösen des aufgesteckten Aufsatzelements eine Verstemmmutter auf die Welle aufgeschraubt werden. Die Welle weist dazu einen Gewindewellenabschnitt, insbesondere ein Art Achszapfen mit einem Außengewinde, auf. Außerdem weisen bekannte Wellen, insbesondere in dem Gewindewellenabschnitt, radiale Aussparungen auf. Nach einem Festziehen der Verstemmmutter und einem Verspannen des Aufsatzelements auf der Welle, insbesondere ein formschlüssiges und drehfestes Verspannen der Radnabe auf dem Achszapfen, kann die Verstemmmutter selbst durch radiale Kraftbeaufschlagung in die Aussparungen der Welle verformt werden. Alternativ oder zusätzlich kann ein Sicherungselement, insbesondere ein Klemmring, verwendet werden, der durch plastische Verformung, insbesondere ein Verstemmen, die Verstemmmutter in der Aussparung formschlüssig und beidseitig drehfest sichert.

Ein Befestigungsverfahren mittels plastischer Verformung der Verstemmmutter oder eines Sicherungselements ist vergleichsweise aufwändig und benötigt eine Vielzahl von Arbeitsschritten, insbesondere in Handarbeit, und spezielle Werkzeuge. Darüber hinaus ist ein Lösen der Verstemmmutter aufgrund der formschlüssigen Verbindung zur Welle, beispielsweise zur Reparatur- und/oder Austauschzwecken nur sehr aufwändig möglich. Außerdem kann es auf Grund der plastischen Verformung und einer miteinhergehenden Materialschwächung zu späteren Korrosionsproblemen kommen.

Alternativ kann als Sicherungselement ein Art Splint oder Rastbolzen eingesetzt werden, wobei dieser Splint in eine als Bohrung ausgebildete Aussparung in der Welle und einen radialen Schlitz einer Kronenmutter eingesetzt wird, um so die Kronenmutter in einem aufgeschraubten Zustand auf der Welle zu fixieren. Eine solche Kronenmutter mit Splint ist beispielsweise aus der DE 69 106 939 T2 bekannt. Die Kronenmutter weist zur Sicherung üblicherweise 6-8 Schlitze mit einem Winkelabstand von 45° bis 60° in Umfangsrichtung auf. Um einen solchen Schlitz mit der Aussparung, insbesondere der Bohrung, innerhalb der Welle in eine radiale Überlappung zu bringen, kann es zu einem Überdrehen der Kronenmutter oder einem zu großen axialen Spiel zu dem Aufsatzelement kommen. Ein falsches Drehmoment auf die Kronenmutter kann insbesondere bei einer Wechselbelastung im Betrieb der Welle zu einem Schaden an der Welle selbst und/oder einem Aufsatzelement führen. Auch die Montage des Splints ist zeitaufwendig und arbeitsintensiv. Des Weiteren ist eine Wiederverwendung einer demontierten Kronenmutter nicht auszuschließen, weshalb hier ein potentielles Sicherheitsrisiko besteht, falls die Kronenmutter selbst beschädigt wurde.

Insbesondere da die voran genannten Sicherungselemente die Verstemmmutter oder die Kronenmutter zusätzlich zu der Sicherung in einer Lösedrehrichtung auch entlang einer Aufschraubdrehrichtung formschlüssig sichern, kann die Verstemmmutter oder die Kronenmutter anschließend an das Befestigungsverfahren nicht nachjustiert werden. So kann es im Betrieb der Welle, insbesondere auf Grund einer wechselnden Belastung, zu einer Vergrößerung des axialen Spiels zu dem Aufsatzelement und einer potentiellen Schädigung kommen.

Druckschrift DE 10 2010 053 595 A1 zeigt eine Rastmutter mit einem geschlossenen Sicherungsring, der auf einer Außenseite mit der Rastmutter eine erste gegenseitige Rastverzahnung ausbildet. Auf einer Innenseite bildet der Sicherungsring eine zweite gegenseitige Rastverzahnung mit einer Welle aus. Dabei ist die erste Rastverzahnung sägezahnförmig ausgebildet, wobei in einer Aufschraubdrehrichtung die Zahnflanken der ersten Rastverzahnung aneinander abgleiten sollen. Dabei ist davon auszugehen, dass bei einer Rotation entlang der Aufschraubdrehrichtung die Zahnflanken der Außenverzahnungen des Sicherungsrings sich verformen und/oder dabei im Kontakt mit den Verzahnungen der Rastmutter abgenutzt werden können. Durch diese Abnutzung kann eine Fixierung entgegen der Aufschraubrichtung beeinflusst sein und insbesondere zu einem ungewollten Lösen der Rastmutter führen. Des Weiteren kann die Verformung der Zahnflanken einen erheblichen Kraftaufwand benötigen, was eine einfache, insbesondere händische Montage verhindert. Insbesondere die Herstellung von verformbaren Zahnflanken des Sicherungsrings, zum Beispiel in der Form von ausgestellten Blechstreifen, erfordert eine erhöhte Fertigungspräzision, um eine drehsichere Rastmutter auszubilden. Zusätzlich weisen verformbare Zahnflanken eine reduzierte Festigkeit auf, weshalb es insbesondere bei einer zyklischen Dauerbelastung zu einem Abbrechen einzelner Zahnflanken und einem Lösen der Rastmutter kommen kann.

Die CN 105 257 670 A zeigt eine nicht-lösbare Anti-Diebstahl-Schraubvorrichtung mit einer Verriegelungsschraube, einer Verriegelungsmutter und einem Sicherungselement, wobei eine Aussparung in einer Gewindestange der Verriegelungsschraube ausgebildet ist und eine Vertiefung in der Verriegelungsmutter ausgebildet ist; eine Gruppe von Verriegelungsnasen sind an der Innenwand der Vertiefung angeordnet; das Sicherungselement weist ein Befestigungsende und ein Widerstandsende auf; das Sicherungselement kann lose in die Vertiefung eingelegt werden, wobei das Sicherungselement im montierten Zustand eine Verriegelung der Schraubvorrichtung ermöglicht.

Die CN 2 646 463 Y offenbart eine verriegelbare Schraubverbindung mit einer Schraube, einer Mutter und einem Sicherungselement. Die Schraube ist mit einer vertikalen Nut versehen; obere und untere Flächen der Mutter sind mit gezackten Vorsprünge periodisch entlang des Umfangs versehen; der Innendurchmesser des Sicherungselements ist mit einer konischen Ausprägung versehen, die in die vertikale Nut der Schraube eingreift. Im Montierten Zustand verklemmen die gezackten Vorsprünge der Mutter mit der Oberfläche des Sicherungselements und ermöglichen eine kostengünstige Diebstahlssicherung.

Die US 4 824 303 A zeigt Verriegelungskeilvorrichtung zur Befestigung einer gedruckten Leiterplatte. Die Vorrichtung umfasst einen länglichen Mittelkeil mit abgeschrägten Oberflächen und zwei Endkeile, die an den gegenüberliegenden abgeschrägten Oberflächen des Mittelkeils anliegen. Die beiden Endkeile sind durch eine Schraube miteinander verbunden, die in eine Gewindebohrung in dem entfernten Endkeil eingreift. Eine Reibungsmutter ist an einem Teil des entfernten Endes der Schraube angebracht, der über den entfernten Endkeil hinausragt, und die Vorrichtung ist so konfiguriert, dass sie ein Paar reibungsarme, aneinanderstoßende Oberflächen zwischen der Mutter und dem entfernten Endkeil aufweist. Dadurch wird sichergestellt, dass beim vollständigen Lösen der Schraube das vom Endkeil auf die Mutter ausgeübte Reibungsmoment durch das von der Schraube auf die Mutter ausgeübte Reibungsmoment übertroffen wird.

Der vorliegenden Erfindung liegt die Aufgabe zugrunde, eine Rastmutter vorzuschlagen, die bei Vermeidung der aus dem Stand der Technik bekannten Probleme besonders einfach montierbar, herstellbar und gleichzeitig ein hohes Maß an Betriebssicherheit gewährleistet.

Diese Aufgabe wird mit den Merkmalen des Anspruchs 1 gelöst.

Vorteilhafte Ausführungsformen sind Gegenstand der Unteransprüche.

Erfindungsgemäß wird eine Rastmutter mit Sicherungselement als axiale Sicherung für ein Aufsatzelement einer Welle, insbesondere eine Lagerung einer Getriebewelle oder ein Radlager einer Gelenkwelle vorgeschlagen, wobei die Rastmutter auf einen, insbesondere endseitigen, Gewindewellenabschnitt der Welle in eine Aufschraubdrehrichtung schraubbar ist, um im montierten Zustand das Aufsatzelement axial und entlang einer Schraubachse auf der Welle zu verspannen, wobei das Sicherungselement einen Eingriffsabschnitt aufweist, der im montierten Zustand in eine Aussparung der Welle eingreift und die Rastmutter entlang einer Lösedrehrichtung, insbesondere formschlüssig, hält. Dabei lagert die Rastmutter das Sicherungselement entlang der Schraubachse, wobei die Rastmutter entlang der Aufschraubdrehrichtung relativ zu dem Sicherungselement einseitig verdrehbar ist.

Weiter ist gemäß der Erfindung vorgesehen, dass die Rastmutter mit dem Sicherungselement entlang der Lösedrehrichtung gegenseitig einrastende Rastverzahnungen in radialer Richtung ausbildet und das Sicherungselement entlang der Schraubachse in die Rastmutter und dessen Rastverzahnung einsetzbar ist, wobei das Sicherungselement als ein in Umfangsrichtung geöffneter Sicherungsring ausgebildet ist, der derart einseitig entlang der Aufschraubdrehrichtung elastisch verformbar ist, dass die Rastmutter entlang der Aufschraubdrehrichtung relativ zu dem Sicherungselement, insbesondere abgleitend, rotierbar ist.

Bevorzugt ist der Sicherungsrichtung in radialer Richtung elastisch verformbar.

Vorzugsweise ist die Aussparung in der Welle entlang der Schraubachse ausgebildet, insbesondere in Form zumindest einer Längsnut, um eine Führung des Eingriffsabschnitts des Sicherungselements während dem Aufschrauben der Rastmutter zu gewährleisten.

Die Erfindung hat erstaunlicherweise erkannt, dass durch die Verwendung einer Rastmutter mit einseitig verdrehbaren Sicherungselement die Rastmutter zum Festlegen des Aufsatzelements unabhängig und ungehindert von dem Sicherungselement auf die Welle aufschraubbar ist und sich in eine entgegengesetzte Lösedrehrichtung selbst sichert. Für diese Selbstsicherung sind keine weiteren Arbeitsschritte oder Spezialwerkzeuge erforderlich. Durch die Lagerung des Sicherungselements wird dieses zusammen mit der Rastmutter entlang der Schraubachse linear verstellt. Die Rastmutter lässt sich also wie eine gewöhnliche Mutter frei beweglich in einer besonders einfachen Weise, insbesondere ohne Spezialwerkzeug und bevorzugt händisch, auf die Welle aufdrehen. Entgegen der Aufschraubdrehrichtung und entlang der Lösedrehrichtung wirkt die Rastmutter selbstsichernd mit dem im montierten Zustand in Umfangsrichtung feststehenden Sicherungselement zusammen, weshalb ein Lösen der Rastmutter durch einen vorzugsweise formschlüssigen Anschlag des Eingriffselements in der Aussparung der Welle behindert oder gesperrt wird.

Mit anderen Worten kann sich die Rastmutter im Unterschied zu bekannten Verstemmmuttern oder Kronenmuttern mit Sicherungssplint vorzugsweise im montierten Zustand selbstsichernd in die Aufschraubdrehrichtung aufschrauben und gleichzeitig entlang der Lösedrehrichtung verrasten.

In einer bevorzugten Ausführungsform bildet die Rastmutter mit dem Sicherungselement entlang der Lösedrehrichtung gegenseitig einrastende Rastverzahnungen aus, wobei zumindest eine der Rastverzahnungen derart elastisch verformbar ist, dass die Rastmutter entlang der Aufschraubdrehrichtung relativ zu dem Sicherungselement, insbesondere abgleitend, rotierbar ist. Durch das elastische Verformen einer der Rastverzahnungen kann die einseitige freie Rotation der Rastmutter in die Aufschraubdrehrichtung ermöglicht werden, wobei während dem Aufschrauben der Rastmutter einzelne Zähne der Rastverzahnungen aneinander abgleiten oder überspringen. In der umgekehrten Lösedrehrichtung verrasten die Rastverzahnungen ineinander und sperren so ein Aufdrehen der Rastmutter und verhindern ein ungewolltes Lösen der Verspannung mit dem Aufsatzelement im montierten Zustand.

Vorzugsweise ist die Rastverzahnung und/oder das elastisch verformbare Sicherungselement derart ausgelegt, dass die Rastmutter entlang der Aufschraubdrehrichtung händisch, insbesondere mit einem Drehmoment von etwa 1Nm bis 6Nm, aufschraubbar ist. Weiter bevorzugt ist die Rastverzahnung derart ausgelegt, dass der Eingriffsabschnitt als eine Art schwächstes Glied wirkt. Dabei ist eine Demontage der Rastmutter vorzugsweise nurmehr durch ein zerstörendes Abbrechen des Eingriffsabschnitts des Sicherungselements möglich. Besonders bevorzugt beträgt ein zur Demontage notwendiges Drehmoment zwischen 70Nm und 90Nm, vorzugsweise 80Nm. Die Form und/oder das Material des Eingriffsabschnitts ist bevorzugt derart, insbesondere mit geringerer Härte und/oder Festigkeit, ausgelegt, dass die Welle nicht durch die Demontage beschädigt wird.

In einer bevorzugten Ausführungsform sind die Rastverzahnungen der Rastmutter und die Rastverzahnungen des Sicherungselements in radialer Richtung ausgebildet und das Sicherungselement ist entlang der Schraubachse in die Rastmutter und dessen Rastverzahnung einsetzbar. Mit anderen Worten ist das Sicherungselement als eine Art Zahnscheibe ausgebildet, die vorzugsweise in eine innenliegende Verzahnung der Rastmutter eingreift.

Eine radiale Rastverzahnung ist vorteilhaft, da in dieser Anordnung eine elastische Verformung in vorteilhafterweise durch das Sicherungselement selbst und nicht durch einzelne stegförmige Verzahnungszähne ausgebildet sein kann. Des Weiteren kann das Sicherungselement sich entlang der Schraubachse in einem Führungsabschnitt bewegen, wobei die radiale Rastverzahnung eine Mindestanpressung aufweist, um einen Verzahnungsverlust zu verhindern. Eine Bewegung des Sicherungselements entlang der Schraubachse erleichtert insbesondere ein Aufschrauben der Rastmutter und einen Eingriff des Eingriffsabschnitts des Sicherungselements in die Aussparung der Welle. Durch die Bewegungsmöglichkeit des Sicherungselements entlang des Führungsabschnitts ergibt sich eine Selbstausrichtung des Eingriffsabschnitts bezüglich der Aussparung der Welle.

Mit anderen Worten kann in einer Weiterbildung bevorzugt vorgesehen sein, dass das Sicherungselement entlang der Schraubachse in einem Führungsabschnitt bewegbar ist, um einen Eingriff des Eingriffsabschnitt in die Aussparung zu erleichtern, wobei die radiale Rastverzahnung eine Mindestanpressung aufweist, um einen Verzahnungsverlust zu verhindern.

In einem bevorzugten Montageverfahren wird die Rastmutter auf die Welle geschraubt, wobei das Sicherungselement mit der Rastmutter um die Schraubachse rotiert und entlang der Schraubachse verstellt wird. Falls der Eingriffsabschnitt nicht bezüglich der Aussparung in der Welle ausgerichtet ist, liegt der Eingriffsabschnitt bei einem Kontakt mit der Welle an einer Stirnseite der Welle an. Eine weitere Rotation der Rastmutter führt zu einer relativen Verstellung des Sicherungselements bezüglich der Rastmutter innerhalb des Führungsabschnitts bis der Eingriffsabschnitt in die Aussparung der Welle, insbesondere als eine Feder-Nut Verbindung, eingreift. Vorzugsweise ist eine Länge des Führungsabschnitts derart ausgebildet, dass ein um bis zu 180° relativ zu der Aussparung verdrehter Eingriffsabschnitt des Sicherungselements zur Selbstausrichtung und ohne Verklemmen in Eingriff gebracht werden kann. Mit anderen Worten wirkt der Führungsabschnitt als ein Art Toleranzbereich entlang der Schraubachse, falls der Eingriffsabschnitt des Sicherungselements nicht von vornhinein bezüglich der Aussparung der Welle ausgerichtet ist. Vorteilhafterweise ermöglicht dieser Führungsabschnitt eine besonders einfache Montage.

In diesem Zusammenhang kann das Sicherungselement bevorzugt als ein in Umfangsrichtung geöffneter und in vorzugsweise radialer Richtung elastisch verformbarer Sicherungsring mit einer radialen Rastverzahnung ausgebildet sein. Der elastisch verformbare Sicherungsring ist vorzugsweise derart ausgebildet, dass im montierten Zustand die Mindestanpressung der radialen Rastverzahnung gewährleistet ist, um einen Verzahnungsverlust im unverformten Zustand zu verhindern. Sobald die Rastmutter entlang der Aufschraubdrehrichtung relativ zu dem Sicherungselement rotiert, gleiten die Rastverzahnungen aneinander und verformen das Sicherungselement in radialer Richtung und/oder in Umfangsrichtung derart, dass die Rastmutter im Wesentlichen ungehindert und frei drehbar ist. Bevorzugt ist eine Steifigkeit des Sicherungselements derart ausgebildet, dass die elastische Verformung und die Rotation der Rastmutter händisch durch eine Bedienperson bedienbar sind. Vorteilhafterweise erzeugt ein ratschenartiges Verdrehen der Rastmutter in der Aufschraubdrehrichtung relativ zu dem Sicherungselement ein Bediengeräusch, insbesondere auf Grund abgleitender und/oder überspringender Rastverzahnungen, das der Bedienperson eine korrekte und sichernde Funktionsweise der Rastmutter anzeigen kann. Insbesondere ein für ein Überspringen der Rastverzahnungen kennzeichnendes ratschenartiges Bediengeräusch lässt auf ein korrektes Eingreifen der Rastverzahnungen schließen. Beispielhaft würde eine mangelnde radiale Mindestanpressung der Rastverzahnungen sich auf das Bediengeräusch auswirken und eine ratschenartige Geräuschcharakteristik abschwächen; wohingegen ein funktionstüchtiger Sicherungsring anschließend an eine elastische Verformung und einem Abgleiten einzelner Rastzähne wieder zurück in eine Verzahnungsstellung springt und dabei ein Bediengeräusch auslöst.

Besonders bevorzugt ist der Eingriffsabschnitt derart zum Zusammenwirken mit der Aussparung in der Welle ausgebildet ist, dass ein Spalt zwischen dem Eingriffsabschnitt und der Aussparung in radialer Richtung ausgebildet ist, um eine Verformung des Sicherungselements in radialer Richtung zu ermöglichen.

**In** einer weiteren bevorzugten Ausführungsform bildet der Eingriffsabschnitt im montierten Zustand der Rastmutter mit der Aussparung eine Feder-Nut Verbindung derart aus, dass bei einer erhöhten Momentenbeaufschlagung auf die Rastmutter entlang der Lösedrehrichtung der Eingriffsabschnitt abbricht. Der Eingriffsabschnitt bildet somit vorteilhafterweise ein schwächstes Glied aus, wobei eine Beschädigung der Welle verhindert werden kann. Gleichzeitig kann die Verzahnung zwischen dem Sicherungselement und der Rastmutter besonders drehsicher ausgebildet sein, da zum Lösen der Rastmutter diese nicht gelöst werden muss.

Insbesondere im Zusammenhang mit den zuvor genannten Spalt zwischen dem Eingriffsabschnitt und der Aussparung hat eine Feder-Nutverbindung den Vorteil, dass im Vergleich zu einer Rastverzahnung eine Kraftübertragung weiterhin, insbesondere durch einen Formschluss, bestehen bleibt. Demgegenüber könnte es bei einem Spalt zwischen Rastverzahnungen zu dem Risiko kommen, dass die Zahnflanken der Rastverzahnungen sich gegenseitig durch den unzureichenden Eingriff beschädigen und auch entlang der Lösedrehrichtung aneinander abgleiten.

Weiter bevorzugt weist die Rastverzahnung der Rastmutter und/oder die Rastverzahnung des Sicherungselements asymmetrische Zahnflanken auf, die derart ausgerichtet sind, dass flache erste Zahnflanken entlang der Aufschraubdrehrichtung aneinander anliegen, insbesondere um ein einseitiges Abgleiten der Rastmutter und eine elastische Verformung des Sicherungselements zu ermöglichen, und wobei entlang der Lösedrehrichtung steile zweite Zahnflanken aneinander anliegen, um die Rastmutter mit dem Sicherungselement einseitig zu verrasten.

Insbesondere durch ein gegenseitiges Anliegen der ersten flachen Zahnflanken in eine Aufschraubdrehrichtung gleiten die ersten Zahnflanken aneinander ab, insbesondere in dem das Sicherungselement in radialer und oder Umfangsrichtung elastisch verformbar wird. Dabei ergibt sich eine Art ratschenartige Bewegung, wobei die Rastmutter als eine Art Ratsche einseitig entlang der Aufschraubdrehrichtung wirkt. Entlang der Lösedrehrichtung liegen gegenüber den ersten Zahnflanken relativ steile zweite Zahnflanken aneinander an, wobei insbesondere eine übertragende Kraftkomponente im Wesentlichen in Umfangsrichtung wirkt und eine Kraftkomponente in radialer Richtung nicht ausreicht um das Sicherungselement zu verformen. Deshalb verrasten die Verzahnungen miteinander und sichern so die Rastmutter vor einer lösenden Rotation.

Insbesondere bei einer radialen Anordnung der Rastverzahnung in Verbindung mit den oben genannten asymmetrischen Zahnflanken ist bei gleichem Drehmoment eine radiale Kraftkomponente auf die erste flache Zahnflanke in Aufschraubdrehrichtung größer als eine radiale Kraftkomponente auf die zweite steile Zahnflanke in der Lösedrehrichtung. Dadurch wird eine elastische Verformung des Sicherungselements in radialer Richtung durch ein Zusammenwirken der ersten flachen Zahnflanken und ein Abgleiten der ersten Zahnflanken entlang der Aufschraubdrehrichtung begünstigt.

Besonders bevorzugt weist die erste flache Zahnflanke einen Radius von 4mm bis 6mm, vorzugsweise 5mm, und/oder eine Flankenhöhe, insbesondere einer geradlinigen ersten flachen Zahnflanke, in radialer Richtung von 0,8mm bis 1,2mm, vorzugsweise 1mm, auf und/oder die zweite steile Zahnflanke einen Radius von 0,4mm bis 0,8mm, vorzugsweise 0,5mm oder 0,75mm. Insbesondere durch den relativ kleinen Radius der steilen zweiten Zahnflanke ergibt sich eine Rastverzahnung in der Lösedrehrichtung, die im Wesentlichen in Umfangsrichtung verrastend wirkt.

Vorzugsweise ist die erste flache Zahnflanke mit dem oben angegebenen Radius in einem Fräsverfahren herstellbar. Alternativ oder zusätzlich kann bevorzugt die erste flache Zahnflanke auch geradlinig, insbesondere geradlinig innerhalb der angegebenen Flankenhöhe, ausgebildet sein.

Weiter bevorzugt weist die Rastverzahnung in Umfangsrichtung Verzahnungen in 15° Winkelabschnitten auf, bevorzugt mit einer Zähnezahl zwischen 22 und 26, besonders bevorzugt 24. Diese Zähnezahl ist insbesondere für ein Sicherungselement mit einem Außendurchmesser von 29mm bis 31mm bevorzugt. Insbesondere durch diese feine Abstimmung der Zähnezahl kann eine Befestigung des Aufsatzelements ohne Spiel oder ein Überdrehen entlang der Schraubachse erfolgen, insbesondere im Vergleich zu Kronenmuttern mit einer Splintsicherung.

Insbesondere in diesem Zusammenhang ist bevorzugt, dass die Rastverzahnung in der Rastmutter zahnlose Abschnitte ausbildet, insbesondere drei gleichmäßig entlang des Umfangs verteilte Abschnitte, die eine Gesamtzähnezahl bevorzugt um 35% bis 40% reduzieren. Durch die Ausbildung von zahnlosen Abschnitten kann ein Abgleiten entlang der Aufschraubdrehrichtung begünstigt und so ein Drehmoment zum Aufschrauben verringert werden, insbesondere um ein händisches Aufschrauben zu ermöglichen.

Vorzugsweise lagert die Rastmutter das Sicherungselement in einer innenseitigen radialen Vertiefung, wobei die Rastmutter angrenzend an die Vertiefung einen endseitigen Umformabschnitt aufweist, der im umgeformten Zustand das Sicherungselement entlang der Schraubachse hält. Mit anderen Worten bildet dieser Umformabschnitt mit dem Sicherungselement einen Anschlag entlang der Schraubachse aus, sodass für ein Auffschrauben auf die Welle das Sicherungselement entlang der Schraubachse mitgeführt wird.

In einer bevorzugten Ausführungsform lagert die Rastmutter, bevorzugt unverlierbar, entlang der Schraubachse zusätzlich eine frei rotierbare Gleitscheibe zur Anlage an das Aufsatzelement, insbesondere in einer formschlüssigen Lagerung, um einen Reibwert zwischen der Rastmutter und dem Aufsatzelement im montierten Zustand zu reduzieren. Dadurch kann also das Aufsatzelement auf die Welle entlang der Schraubachse verspannt werden, ohne in Umfangsrichtung eine Kraftkomponente zu erfahren.

Außerdem betrifft die Erfindung auch eine Welle mit zumindest einer voran beschriebenen Rastmutter mit Sicherungselement, wobei die zumindest eine Rastmutter auf zumindest einem Gewindewellenabschnitt der Welle aufgeschraubt ist und die Welle zumindest eine Aussparung, insbesondere in Form einer Längsnut, entlang der Schraubachse ausbildet, in die das Sicherungselement mit zumindest einem Eingriffsabschnitt eingreift, insbesondere in einer Feder-Nut Verbindung, um die zumindest eine Rastmutter entlang einer Lösedrehrichtung im montierten Zustand auf der Welle, insbesondere formschlüssig, zu halten und ein Aufsatzelement auf der Welle zu verspannen. Als Welle kann im Sinne der Erfindung insbesondere eine Getriebewelle oder eine Gelenkwelle für ein Radlager verstanden werden. Insbesondere bei der Verwendung mehrere Aufsatzelemente und einer Welle mit mehreren Gewindewellenabschnitten, können mehrere Rastmuttern eingesetzt und auf die Welle geschraubt werden, um jeweils ein Aufsatzelement zu verspannen. Um die Sicherungswirkung der Rastmutter zu verstärken, können bevorzugt zwei Aussparungen in der Welle angeordnet sein, wobei das Sicherungselement mit zwei Eingriffsabschnitten entsprechend in die Welle eingreift.

In einem bevorzugten Herstellungsverfahren einer der voran genannten Ausführungsformen der Rastmutter wird in einem Rastmutterrohling entlang der Schraubachse eine radiale Vertiefung mit einer Verzahnungskontur, insbesondere mittels eines Prägeprozesses, oberhalb eines Innengewindes eingeformt. Vorzugsweise anschließend wird weiter oberhalb der Verzahnungskontur ein endseitiger Umformabschnitt entlang der Schraubachse eingeformt. Bevorzugt ist zwischen dem Innengewinde und der Rastverzahnung ein Zentrierabschnitt entlang der Schraubachse ausgebildet, um den Rastmutterrohling bezüglich einem Prägewerkzeug zu zentrieren und entlang der Schraubachse zu führen. Weiter bevorzugt weist der Zentrierabschnitt einen größeren Innendurchmesser als das Innengewinde auf, um zu dem Innendurchmesser entlang der Schraubachse einen Anschlag auszubilden.

Zusätzlich oder alternativ kann der Zentrierabschnitt auch einen definierten Abstand zwischen dem Innengewinde und der Rastverzahnung ausbilden, um die Rastmutter an eine vordefinierte Wellengeometrie anzupassen. So kann die Aussparung in der Welle endseits ausgebildet sein und ein Aufsatzelement beabstandet zu der Aussparung entlang der Schraubachse angeordnet sein, wobei eine Länge des Zentrierabschnitts derart ausgebildet ist, dass die Rastmutter mit Innengewinde auf die Welle aufschraubbar, das Aufsatzelement verspannbar ist und gleichzeitig das Sicherungselement endseits der Welle in die Aussparung eingreift.

Vorzugsweise ist die Rastmutter als ein entlang der Schraubachse ausgebildeter Rundkörper ausgebildet, der insbesondere im Bereich des Innengewindes eine Angriffs- oder Eingriffs-Außenkontur für Befestigungswerkzeuge, insbesondere Sechskantwerkzeuge, aufweist. Vorzugsweise ist die Außenkontur im Bereich der Rastverzahnung und dem Zentrierabschnitt zylindrisch, insbesondere ohne eine Sechskantgeometrie, ausgebildet, um vorzugsweise ein Präge- und/oder Umformwerkzeug auf der Außenkontur führen zu können.

**In** einem bevorzugten Montageverfahren der Rastmutter wird das Sicherungselement entlang der Schraubachse in die radiale Vertiefung innerhalb der Rastmutter eingelegt und die Rastverzahnungen in der Rastmutter mit denen des Sicherungselements in Eingriff gebracht. Zur axialen Sicherung des Sicherungselements wird in einem nächsten Schritt der Umformabschnitt radial nach innen umgeformt, insbesondere umgebördelt, um eine axialen Anschlag mit dem Sicherungselement auszubilden.

Bevorzugt anschließend kann die Rastmutter mit Sicherungselement auf die Welle aufgeschraubt werden, wobei der Eingriffsabschnitt des Sicherungselements durch Rotation der Rastmutter in eine Eingriffsposition mit der Aussparung in der Welle, insbesondere eine Längsnut, gebracht wird und bevorzugt formschlüssig in Umfangsrichtung einrastet. Insbesondere durch weitere Rotation der Rastmutter entlang der Aufschraubrichtung kann, wie bereits oben beschrieben, die Rastmutter zum Verspannen des Aufstazelements relativ zu dem feststehenden Sicherungselement aufgeschraubt werden, wobei das Sicherungselement als eine Selbstsicherung in eine Lösedrehrichtung für die Rastmutter ausbildet.

Weitere Vorteile und Einzelheiten der Erfindung ergeben sich aus der nachfolgenden Beschreibung bevorzugter Ausführungsformen der Erfindung sowie anhand von lediglich schematischen Zeichnungen.

Es zeigen:
- Fig. 1a:: eine geschnittene Seitenansicht auf eine Rastmutter mit Sicherungselement im aufgeschraubten Zustand mit einer Welle,
- Fig. 1b:: eine Draufsicht auf die Rastmutter mit Welle gemäß der Fig. 1a,
- Fig. 2a:: Schnittansicht auf die Rastmutter mit Sicherungselement gemäß der Fig. 1a,
- Fig. 2b:: Draufsicht auf die Rastmutter mit Sicherungselement gemäß der Fig. 1b
- Fig. 3:: perspektivische Ansicht auf die Welle mit einem Gewindewellenabschnitt gemäß der Fig. 1a,
- Fig. 4a bis Fig. 4d:: Ansichten auf die Rastmutter gemäß der Fig. 1a bis Fig. 2b
- Fig. 5a und Fig. 5b:: Seiten- und Draufsicht auf das Sicherungselement gemäß der Fig. 1a,
- Fig. 6:: Draufsicht auf die Rastmutter mit Sicherungselement gemäß der Fig. 4c und Fig. 5b,
- Fig. 7a bis Fig. 7c:: Ansichten auf eine Gleitscheibe gemäß der Fig. 1a.

Gleiche Elemente beziehungsweise Elemente mit gleicher Funktion sind in den Figuren mit den gleichen Bezugsziffern versehen.

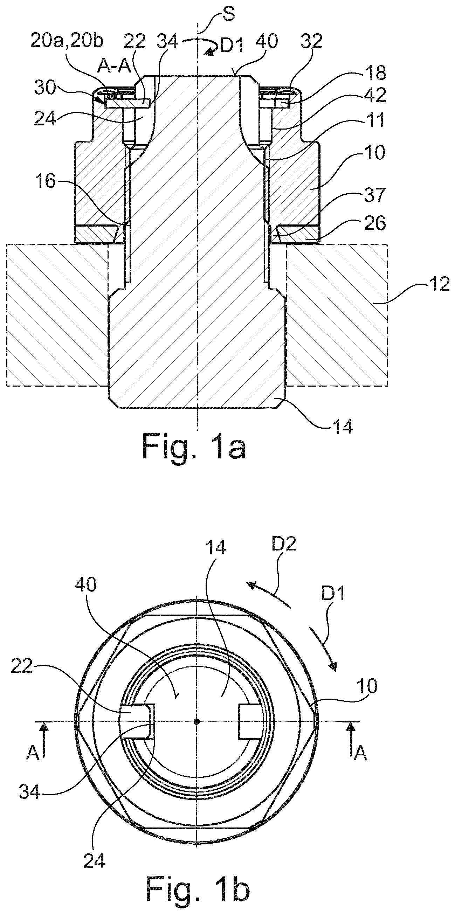

In der Fig. 1a und der Fig. 1b ist eine Rastmutter 10 mit Sicherungselement 18 im montierten Zustand auf einer Welle 14, insbesondere ein beispielhafter Endabschnitt eines Antriebswellengelenks eines Kraftfahrzeuges, dargestellt. Die Rastmutter 10 ist mit einem Innengewindeabschnitt 11 auf einen Gewindewellenabschnitt 16 der Welle 14 in eine Aufschraubdrehrichtung D1 aufgeschraubt und verspannt ein schematisch dargestelltes Aufsatzelement 12, zum Beispiel ein Radlager, auf der Welle 14 axial entlang einer Schraubachse S. Oberhalb des Innengewindeabschnitts 11 der Rastmutter 10 ist eine innenliegende Vertiefung 30 vorzugsweise in radialer Richtung ausgebildet, in der das Sicherungselement 18 entlang der Schraubachse S gelagert ist. Das Sicherungselement 18 weist einen Eingriffsabschnitt 22 auf, der in Richtung einer Aussparung 24 in der Welle 14 vorsteht und in dem hier dargestellten aufgeschraubten Zustand in der Aussparung 24, vorzugsweise formschlüssig eingreift. In die Aufschraubdrehrichtung D1 lässt sich die Rastmutter 10 relativ zu dem mit der Welle 10 in Eingriff stehenden Sicherungselement 18 einseitig verdrehen. In eine Lösedrehrichtung D2 sperrt der Eingriffsabschnitt 22 mittels eines, bevorzugt formschlüssigen, Anschlags mit der Aussparung 24 eine lösende Rotation der Rastmutter 10. So kann also die Rastmutter 10 gegen eine lösende Drehbewegung selbstsichernd verrasten.

Um die einseitige Verdrehbarkeit zu ermöglichen, steht die Rastmutter 10 vorzugsweise mit Rastverzahnungen 20a, 20b mit dem Sicherungselement 18 in Wirkverbindung, wobei vorzugsweise das Sicherungselement 18 bei einer Rotation in die Aufschraubdrehrichtung D1 sich elastisch verformt und ratschenartig die Rastverzahnungen 20a, 20b aneinander abgleiten.

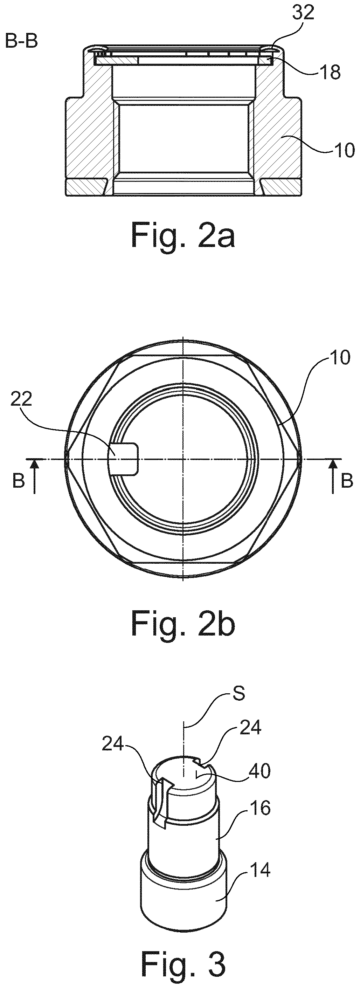

Die Fig. 2a und die Fig. 2b zeigen erneut die Rastmutter 10 im nicht montierten Zustand, wobei das Sicherungselement 18 in der radialen Vertiefung 30 durch einen Umformabschnitt 32 entlang der Schraubachse S gelagert ist.

In der Fig. 3 ist die Welle 14 und insbesondere die Aussparungen 24 dargestellt, die vorzugsweise als zumindest eine Längsnut, hier zwei Längsnuten, entlang der Schraubachse S ausgebildet ist. Der Eingriffsabschnitt 22 des Sicherungselements 18 kann während eines Montage- und Aufschraubvorgangs der Rastmutter 10 in der Aussparung 24 als eine Feder-Nut Verbindung eingreifen und entlang der Schraubachse S geführt werden. Dabei wird das Sicherungselement 18 insbesondere durch den Umformabschnitt 32 innerhalb der Vertiefung 30 gehalten. Ein Drehmoment auf die Rastmutter 10 in die Lösedrehrichtung D2 kann mittels der Rastverzahnungen 20a, 20b auf das Sicherungselement 18 und damit die Welle 14 im Bereich der Aussparung 24 übertragen und gegen ein Aufdrehen gesichert sein. Vorzugsweise ist die Aussparung 24 endseits der Welle 14 und zu einer Stirnseite 40 der Welle 14 hin geöffnet ausgebildet, wobei eine radiale Tiefe der Aussparung 24 in einem Übergangsabschnitt, insbesondere zu dem Gewindewellenabschnitt 16 der Welle, vorzugsweise nicht stufenartig, insbesondere konvex abnimmt.

Die Vertiefung 30 ist vorzugsweise entlang der Schraubachse S mit einer Höhe größer als die Dicke t des Sicherungselements 18 ausgebildet, um so einn Führungsabschnitt mit begrenzter Translationsmöglichkeit des Sicherungselements 18 entlang der Schraubachse S und ein Art Lagerspiel gegenüber der Rastmutter 10 auszubilden. Durch diese Translationsmöglichkeit kann während eines Montageschrittes sich der Eingriffsabschnitt 22 des Sicherungselements 18 selbst ausrichten. Sobald während der Montage ein nicht ausgerichteter Eingriffsabschnitt 22 an einer Stirnseite 40 der Welle 14 anliegt, kann sich das Sicherungselement 18 innerhalb der Vertiefung 30 entlang der Schraubachse S bewegen, bis der Eingriffsabschnitt 22 in die Aussparung 24 in der Welle 14 durch weitere Rotation der Rastmutter 10 überlappt und einrastet. Ein Einrasten des Eingriffsabschnitts 22 kann insbesondere begünstigt werden, falls das Sicherungselement 18 zu Beginn der Montage einen Spalt zu dem Umformabschnitt 32 ausbildet.

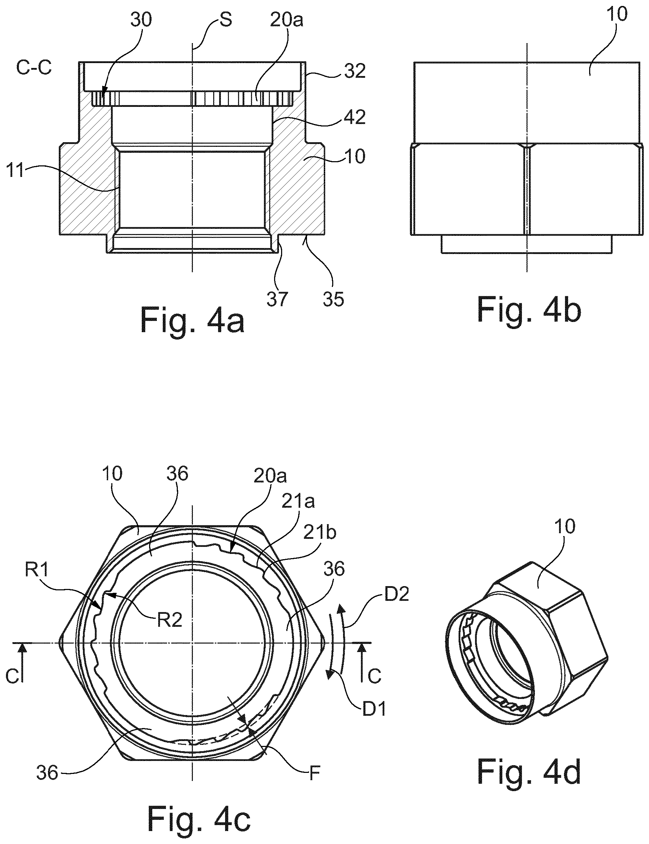

In der Fig. 4a bis Fig. 4d ist die Rastmutter 10 als ein Rastmutterrohling mit einem nicht bearbeiteten Umformabschnitt 32 gezeigt. Zur Montage des Sicherungselements 18 in der Vertiefung 30 wird zuerst das Sicherungselement 18 eingelegt und anschließend der Umformabschnitt 32 umgeformt oder umgebördelt, um einen Anschlag gemäß der Fig. 1a oder Fig. 2a für das Sicherungselement 18 entlang der Schraubachse S auszubilden.

Wie die Fig. 4b und die Fig. 4d zeigen, weist der Rastmutterrohling bevorzugt einen zylindrischen Grundkörper mit einer Sechskant-Außenkontur für Befestigungswerkzeuge auf. Vorzugsweise ist die Sechskant-Außenkontur im Bereich des Innengewindes 11 ausgebildet. Oberhalb des Innengewindes 11 entlang der Schraubachse S ist die Außenkontur bevorzug zylindrisch, um ein Anliegen von Präge- und/oder Umformwerkzeugen zu ermöglichen.

Insbesondere die Fig. 4c zeigt, dass die Rastverzahnungen 20a in der Rastmutter 10 bevorzugt in radialer Richtung in der Vertiefung 30 ausgebildet sind und bevorzugt eine asymmetrische Verzahnungskontur aufweisen.

Bevorzugt ist gemäß der Fig. 4a zwischen dem Innengewinde 11 der Rastmutter 10 und der Rastverzahnungen 20a ein Zentrierabschnitt 42 entlang der Schraubachse S ausgebildet, um einen Abstand zwischen der Rastverzahnung 20a und dem Innengewinde 11 einzustellen, insbesondere um einen Eingriff in eine vordefinierte endseitige Aussparung 24 einer Welle 14 zu ermöglichen und/oder um den Rastmutterrohling in einem Prägeprozess der Rastverzahnung 20a entlang der Schraubachse S gegenüber ein Prägewerkzeug zu führen und zu zentrieren. Vorzugsweise weist der Zentrierabschnitt 42 einen größeren Innendurchmesser als das Innengewinde 11 auf, insbesondere um einen Anschlag zu dem Innengewinde 11 auszubilden und im Herstellungsprozess eine Beschädigung des Innengewindes 11 zu verhindern.

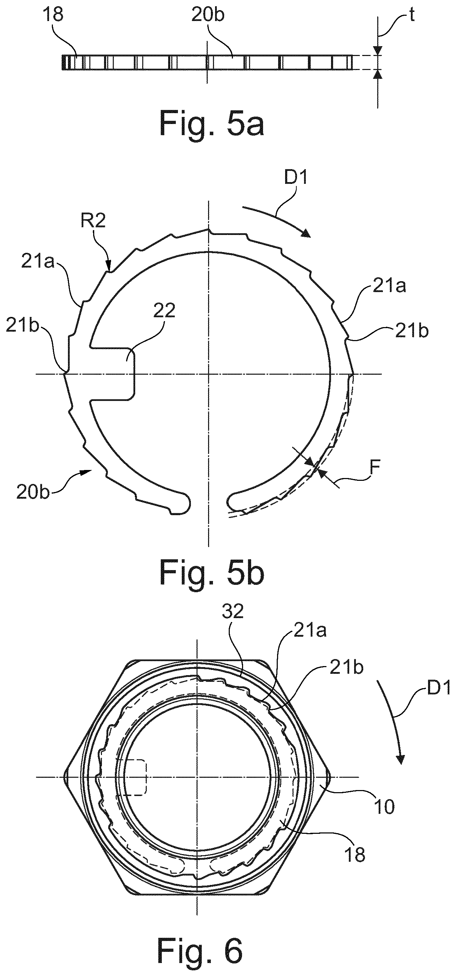

Die Fig. 5a und die Fig. 5b zeigen das Sicherungselement 18 im Detail, das vorzugsweise als ein in Umfangsrichtung geöffneter Sicherungsring ausgebildet ist und entsprechend der Rastmutter 10, gemäß der Fig. 4c, ebenfalls radiale Rastverzahnungen 20b auf einem Außenumfang aufweist. Insbesondere ein solch geöffneter Sicherungsring erlaubt ein elastisches Verformen, insbesondere in radialer Richtung, um im verformten Zustand ein Lösen, insbesondere ein ratschenartiges Abgleiten, der Rastverzahnung 20a, 20b in der Aufschraubdrehrichtung D1 zu ermöglichen. Damit das als Sicherungsring ausgebildete Sicherungselement 18 sich im montierten Zustand auch elastisch verformen kann, ist ein in der Fig. 1b dargestellter Spalt 34 im montierten Zustand zwischen dem Eingriffsabschnitt 22 innerhalb der Aussparung 24 ausgebildet.

In der Fig. 6 ist das Sicherungselement 18 gestrichelt in einem eingesetzten Zustand innerhalb der Rastmutter 10, mit einem nicht bearbeiteten Umformabschnitt 32 gemäß der Fig. 4c, dargestellt, wobei in der Aufschraubdrehrichtung D1, hier im Uhrzeigersinn, vorzugsweise flache erste Zahnflanken 21a aneinander anliegen. Entgegen der Aufschraubdrehrichtung D1 und in der Lösedrehrichtung D2 liegen vorzugsweise steile zweite Zahnflanken 21b aneinander an. Auf Grund der unterschiedlichen Steigungen der zwei Zahnflanken 21a, 21b sind Kraftkomponenten in radialer Richtung in Abhängigkeit einer Drehrichtung unterschiedlich stark ausgebildet. Entlang der Aufschraubdrehrichtung D1 wird durch eine relativ hohe radiale Kraftkomponente das Sicherungselement 18, insbesondere radial, verformt und ein einseitiges Abgleiten der Rastmutter 10 ermöglicht. In umgekehrter Richtung stehen die steilen Zahnflanken 21b aneinander formschlüssig entgegen und verkanten oder verrasten im Wesentlichen in Umfangsrichtung, wobei eine radiale Kraftkomponente vorzugsweise nicht groß genug ist, um das Sicherungselement 18 radial zu verformen.

Vorzugsweise erste flache Zahnflanke 21a, insbesondere der Rastverzahnung 20a der Rastmutter 10, gemäß der Fig. 4c, weisen einen Radius R1 von 4mm bis 6mm, besonders bevorzug 5mm auf und/oder eine Flankenhöhe F in radialer Richtung von 0,8mm bis 1,2mm, vorzugsweise 1mm, auf. Vorzugsweise weist die erste flache Zahnflanke 21a des Sicherungselements 18, gemäß der Fig. 5b, eine geradlinige, vorzugsweise lineare Steigung innerhalb der radialen Flankenhöhe F auf. Die Flankenhöhe F entspricht der Höhe einer Verzahnung in radialer Richtung. Insbesondere eine lineare Steigung, ermöglicht ein besonders gleichmäßiges Abgleiten der flachen Rastverzahnungen 21a. Weiter bevorzugt weist die steile zweite Zahnflanke 21b einen Radius R2 von 0,4mm bis 0,8mm, vorzugsweise 0,5mm für die zweite Zahnflanke 21b des Sicherungselements 18 und 0,75mm für die zweite Zahnflanke 21b der Rastmutter 10.

Vorzugsweise sind in Umfangsrichtungen Verzahnungen in 12° bis 18°, insbesondere 15°, Winkelabschnitten angeordnet. Weiter bevorzugt sind innerhalb der Rastverzahnung 20a der Rastmutter 10 mehrere zahnlose Abschnitte 36, insbesondere drei, angeordnet, die eine Gesamtzähnezahl bevorzugt um 35% bis 40% reduzieren. Dadurch können die im Eingriff stehenden Verzahnungen reduziert und ein Aufschraubdrehmoment reduziert, sowie eine Verformung des Sicherungselements 18 erleichtert werden, insbesondere um ein händisches Montieren der Rastmutter 10 zu ermöglichen.

Die Dimensionen des Sicherungselements 18, insbesondere die in der Fig. 5a dargestellte Dicke t, sind in Verbindung mit der Rastverzahnung 20a, 20b derart ausgewählt, dass bei einer Demontage der Rastmutter 10 der Eingriffsabschnitt 22 abbricht und deshalb eine Art schwächstes Glied ausbildet. Vorzugsweise weist das Sicherungselement 18 eine Dicke t zwischen 1mm und 2mm, besonders bevorzugt 1,5mm, auf.

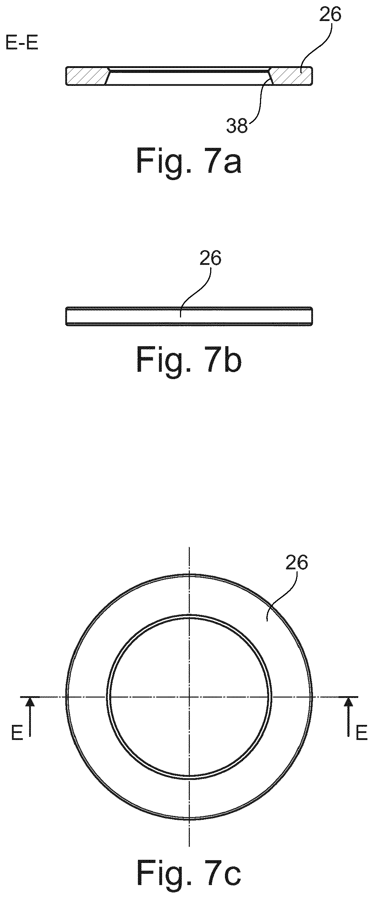

**In** der Fig. 1a und den Fig. 7a bis Fig. 7c ist eine Gleitscheibe 26 dargestellt, die frei rotierbar und formschlüssig in der Rastmutter 10 entlang der Schraubachse S zur Anlage an das Aufsatzelement 12 gelagert ist. Die Gleitscheibe 26 dient dazu eine Reibung während eines Verspannens des Aufsatzelements 12 auf der Welle 14 zu reduzieren und vereinfacht so ein Aufschrauben der Rastmutter 10.

Aus einer Zusammenschau der Fig. 1a, Fig. 4a und Fig. 7a wird eine Montage der Gleitscheibe 26 ersichtlich, wobei die Gleitscheibe 26 auf eine Gleitfläche 35 der Rastmutter 10 aufgelegt wird. Anschließend wird ein vorerst gemäß der Fig. 4a entlang der Schraubachse S ausgebildeter Gleitumformabschnitt 37, insbesondere mittels eines Bördelverfahrens, auf eine vorzugsweise konische Innenkontur 38 der Gleitscheibe 26 umgeformt. Dadurch wird ein Hinterschnitt ausgebildet, der gemäß der Fig. 1a die Gleitscheibe 26 entlang der Schraubachse S rotierbar lagert.

**In** einem bevorzugten Herstellungsverfahren wird die Rastverzahnung 20a der Rastmutter 10 gemäß der Fig. 4a oder der Fig. 4c entlang der Schraubachse S eingeprägt, um so ein besonders schnelles und kostengünstiges Herstellungsverfahren zu realisieren.

Die soweit beschriebene Rastmutter 10 kann in vielfältiger Art und Weise abgewandelt oder modifiziert werden, ohne vom Erfindungsgedanken abzuweichen. So ist es zum Beispiel denkbar, dass die Rastverzahnungen 20a und 20b auch entlang der Schraubachse S ausgebildet sind und aufeinander einwirken. Dabei könnte ein einseitiges Lösen der Verzahnung 20 durch elastische Verformung einzelner Zahnflanken 21 erfolgen, wobei dann ein Spiel entlang der Schraubachse S verhindert werden müsste.

### Bezugszeichenliste

- 10: Rastmutter
- 11: Innengewinde der Rastmutter
- 12: Aufsatzelement
- 14: Welle
- 16: Gewindewellenabschnitt
- 18: Sicherungselement
- 20a: Rastverzahnungen der Rastmutter
- 20b: Rastverzahnungen des Sicherungselements
- 21a: erste flache Zahnflanke
- 21b: zweite steile Zahnflanke
- 22: Eingriffsabschnitt
- 24: Aussparung der Welle
- 26: Gleitscheibe
- 30: Vertiefung in der Rastmutter
- 32: Umformabschnitt
- 34: Spalt zw. Eingriffsabschnitt und Aussparung
- 35: Gleitfläche
- 36: zahnlose Abschnitte der Rastmutter
- 37: Gleitumformabschnitt
- 38: Innenkontur der Gleitscheibe
- 40: Stirnseite der Welle
- 42: Zentrierabschnitt

- A,B,C,E: Schnittansichten
- D1: Aufschraubdrehrichtung
- D2: Lösedrehrichtung
- F: Flankenhöhe
- S: Schraubachse
- R1: Radius der ersten flachen Zahnflanke
- R2: Radius der zweiten steilen Zahnflanke
- t: Dicke des Sicherungselements

## Patentansprüche

1. Rastmutter (10) mit Sicherungselement (18) als axiale Sicherung für ein Aufsatzelement (12) einer Welle (14), insbesondere eine Lagerung einer Getriebewelle oder ein Radlager einer Gelenkwelle, wobei die Rastmutter (10) auf einen, insbesondere endseitigen, Gewindewellenabschnitt (16) der Welle (14) in eine Aufschraubdrehrichtung (D1) schraubbar ist, um im montierten Zustand das Aufsatzelement (12) axial und entlang einer Schraubachse (S) auf der Welle (14) zu verspannen, wobei das Sicherungselement (18) einen Eingriffsabschnitt (22) aufweist, der im montierten Zustand in eine Aussparung (24) der Welle (14) eingreift und die Rastmutter (10) entlang einer Lösedrehrichtung (D2) hält,
wobei die Rastmutter (10) das Sicherungselement (18) entlang der Schraubachse (S) lagert, wobei die Rastmutter (10) entlang der Aufschraubdrehrichtung (D1) relativ zu dem Sicherungselement (18) einseitig verdrehbar ist, wobei die Rastmutter (10) mit dem Sicherungselement (18) entlang der Lösedrehrichtung (D2) gegenseitig einrastende Rastverzahnungen (20a, 20b) in radialer Richtung ausbildet und das Sicherungselement (18) entlang der Schraubachse (S) in die Rastmutter (10) und dessen Rastverzahnung (20a) einsetzbar ist,
wobei das Sicherungselement (18) als ein in Umfangsrichtung geöffneter Sicherungsring ausgebildet ist, der derart einseitig entlang der Aufschraubdrehrichtung (D1) elastisch verformbar ist, dass die Rastmutter (10) entlang der Aufschraubdrehrichtung (D1) relativ zu dem Sicherungselement (18), insbesondere abgleitend, rotierbar ist.

2. Rastmutter nach dem Anspruch 1,
**dadurch gekennzeichnet,**
**dass** der Eingriffsabschnitt (22) derart zum Zusammenwirken mit der Aussparung (24) in der Welle (14) ausgebildet ist, dass im montierten Zustand der Rastmutter (10) ein Spalt (34) zwischen dem Eingriffsabschnitt (22) und der Aussparung (24) in radialer Richtung ausgebildet ist, um eine Verformung des Sicherungselements (18) in radialer Richtung zu ermöglichen.

3. Rastmutter nach dem Anspruch 1 oder 2,
**dadurch gekennzeichnet,**
**dass** der Eingriffsabschnitt (22) im montierten Zustand der Rastmutter (10) mit der Aussparung (24) eine Feder-Nut Verbindung derart ausbildet, dass bei einer erhöhten Momentenbeaufschlagung auf die Rastmutter (10) entlang der Lösedrehrichtung (D2) der Eingriffsabschnitt (22) abbricht.

4. Rastmutter nach einem der Ansprüche 1 bis 3,
**dadurch gekennzeichnet,**
**dass** das Sicherungselement (18) entlang der Schraubachse (S) in einem Führungsabschnitt bewegbar ist, um einen Eingriff des Eingriffsabschnitt (22) in die Aussparung (24) zu erleichtern, wobei die radiale Rastverzahnung (20a, 20b) eine Mindestanpressung aufweist, um einen Verzahnungsverlust zu verhindern.

5. Rastmutter nach einem der Ansprüche 2 bis 4,
**dadurch gekennzeichnet,**
**dass** die Rastverzahnung (20a) der Rastmutter (10) und/oder die Rastverzahnung (20b) des Sicherungselements (18) asymmetrische Zahnflanken (21a, 21b) aufweisen, die derart ausgerichtet sind, dass flache erste Zahnflanken (21a) entlang der Aufschraubdrehrichtung (D1) aneinander anliegen, insbesondere um ein einseitiges Abgleiten der Rastmutter (10) und eine elastische Verformung des Sicherungselements (18) zu ermöglichen, und wobei entlang der Lösedrehrichtung (D2) steile zweite Zahnflanken (21b) aneinander anliegen, um die Rastmutter (10) mit dem Sicherungselement (18) einseitig zu verrasten.

6. Rastmutter nach dem Anspruch 5,
**dadurch gekennzeichnet,**
**dass** die erste flache Zahnflanke (21a) einen Radius von 4mm bis 6mm, vorzugsweise 5mm, und/oder eine Flankenhöhe (F), insbesondere einer geradlinigen ersten flachen Zahnflanke (21a), in radialer Richtung von 0,8mm bis 1,2mm, vorzugsweise 1mm, aufweist, und/oder die zweite steile Zahnflanke (21b) einen Radius von 0,4mm bis 0,8mm, vorzugsweise 0,5mm oder 0,75m, aufweist.

7. Rastmutter nach einem der Ansprüche 2 bis 5,
**dadurch gekennzeichnet,**
**dass** die Rastverzahnung (20a, 20b) in Umfangsrichtung Verzahnungen in 15° Winkelabschnitten aufweisen, bevorzugt mit einer Zähnezahl zwischen 22 und 26, besonders bevorzugt 24.

8. Rastmutter nach einem der Ansprüche 1 bis 7,
**dadurch gekennzeichnet**,
die Rastmutter (10) in einer innenseitigen radialen Vertiefung (30) das Sicherungselement (18) lagert, wobei die Rastmutter (10) angrenzend an die Vertiefung (30) einen endseitigen Umformabschnitt (32) aufweist, der im umgeformten Zustand das Sicherungselement (18) entlang der Schraubachse (S) hält.

9. Rastmutter nach einem der Ansprüche 1 bis 8,
**dadurch gekennzeichnet**,
die Rastmutter (10) entlang der Schraubachse (S) eine frei rotierbare Gleitscheibe (26) zur Anlage an das Aufsatzelement (12), insbesondere in einer formschlüssigen Lagerung, lagert, um einen Reibwert zwischen der Rastmutter und dem Aufsatzelement (12) im montierten Zustand zu reduzieren.

10. Welle mit zumindest einer Rastmutter (10) mit Sicherungselement (18) nach einem der Ansprüche 1 bis 9, wobei die zumindest eine Rastmutter auf zumindest einem Gewindewellenabschnitt (16) der Welle aufgeschraubt ist und die Welle zumindest eine Aussparung, insbesondere in Form einer Längsnut, entlang der Schraubachse (S) ausbildet, in die das Sicherungselement mit zumindest einem Eingriffsabschnitt eingreift, um die zumindest eine Rastmutter (10) entlang einer Lösedrehrichtung (D1) auf der Welle (14) zu halten und ein Aufsatzelement (12) auf der Welle (14) zu verspannen.

## Claims

1. A pawl nut (10) having a securing element (18) as an axial securing mechanism for a topper element (12) of a shaft (14), in particular a bearing of a gear shaft or a wheel bearing of a Cardan shaft, the pawl nut (10) being screwed on a, in particular frontal, thread-shaft section (16) of the shaft (14) in a tightening direction (D1) in order to axially brace the topper element (12) on the shaft (14) along a screwing axis (S) in the mounted state, the securing element (18) having an engagement section (22) which engages in a recess (24) of the shaft (14) and holds the pawl nut (10) along a loosening direction (D2) in the mounted state,
the pawl nut (10) mounting the securing element (18) along the screwing axis (S), the pawl nut (10) being twisted in one direction along the tightening direction (D1) in relation to the securing element (18), the pawl nut (10) together with the securing element (18) forming pawl indentations (20a, 20b), which mutually engage along the loosening direction (D2), in the radial direction and the securing element (18) being inserted in the pawl nut (10) and its pawl indentations (20a) along the screwing axis (S), the securing element (18) being formed as a securing ring which is open in the circumferential direction and is elastically deformable in such a manner in one direction along the tightening direction (D1) that the pawl nut (10) is rotatable along the tightening direction (D1) in relation to the securing element (18), in particular in a sliding manner.

2. The pawl nut according to claim 1,
**characterized in that**
the engagement section (22) is formed to interact with the recess (24) in the shaft (14) in such a manner that a gap (34) is formed between the engagement section (22) and the recess (24) in the radial direction in the mounted state of the pawl nut to allow a deformation of the securing element (18) in the radial direction.

3. The pawl nut according to claim 1 or 2,
**characterized in that**
the engagement section (22) together with the recess (24) forms a spring-and-groove connection in the mounted state of the pawl nut (10) such that the engagement section (22) breaks off when the pawl nut (10) is subjected to increased torque along the loosening direction (D2).

4. The pawl nut according to any one of the claims 1 to 3,
**characterized in that**
the securing element (18) is moveable in a guide section along the screwing axis (S) to alleviate an engagement of the engagement section (22) into the recess (24), the radial pawl indentations (20a, 20b) having a minimum contact pressure to prevent an indentation loss.

5. The pawl nut according to any one of the claims 2 to 4,
**characterized in that**
the pawl indentation (20a) of the pawl nut (10) and/or the pawl indentation (20b) of the securing element (18) have asymmetrical indentation flanks (21a, 21b) which are aligned in such a manner that first flat indentation flanks (21a) abut against each other along the tightening direction (D1), in particular to ensure a one-directional sliding of the pawl nut (10) and an elastic deformation of the securing element (18), and second steep indentation flanks (21b) abutting against each other along the loosening direction (D2) in order to interlock the pawl nut (10) with the securing element (18) in one direction.

6. The pawl nut according to claim 5,
**characterized in that**
the first flat indentation flank (21a) has a radius of 4 mm to 6 mm, preferably 5 mm, and/or a flank height (F), in particular of a straight first flat indentation flank (21a), of 0.8 mm to 1.2 mm, preferably 1 mm, in the radial direction and/or **in that** the second steep indentation flank (21b) has a radius of 0.4 mm to 0.8 mm, preferably 0.5 mm to 0.75 mm.

7. The pawl nut according to any one of the claims 2 to 5,
**characterized in that**
the pawl indentation (20a, 20b) has indentations in 15° angle sections in the circumferential direction, preferably having a number of indentations between 22 and 26, particularly preferably 24.

8. The pawl nut according to any one of the claims 1 to 7,
**characterized in that**
the pawl nut (10) mounts the securing element (18) in an interior radial slot (30), the pawl nut (10) having a frontal deforming section (32), which holds the securing element (18) along the screwing axis (S) in the deformed state, adjacent to the slot (30).

9. The pawl nut according to any one of the claims 1 to 8,
**characterized in that**
the pawl nut (10) mounts a freely rotatable sliding disk (26) along the screwing axis (S) for abutting against the topper element (12), in particular in a form-fitted mounting, in order to reduce a friction coefficient between the pawl nut and the topper element (12) in the mounted state.

10. A shaft having at least one pawl nut (10) having a securing element (18) according to any one of the claims 1 to 9, the at least one pawl nut being screwed onto at least one thread-shaft section (16) of the shaft and the shaft forming at least one recess, in particular in the form of a longitudinal groove, along the screwing axis (S), the securing element engaging into the recess with at least one engagement section in order to hold the at least one pawl nut (10) on the shaft (14) along a loosening direction (D1) and to brace a topper element (12) on the shaft (14).

## Revendications

1. Écrou de verrouillage (10) ayant un élément sécurisant (18) comme mécanisme sécurisant axial pour un élément de rehaussement (12) d'un arbre (14), en particulier un montage d'un arbre de transmission ou un roulement à billes d'un arbre à cardan, l'écrou de verrouillage (10) étant vissé sur une partie d'arbre fileté (16) de l'arbre (14), notamment disposée sur une face terminale, dans un sens de serrage (D1) afin de caler axialement l'élément de rehaussement (12) sur l'arbre (14) et le long d'un axe de vissage (S) à l'état monté, l'élément sécurisant (18) ayant une partie d'engagement (22) qui s'engage dans un évidement (24) de l'arbre (14) et maintient l'écrou de verrouillage (10) le long d'un sens de dévissage (D2) à l'état monté,
l'écrou de verrouillage (10) montant l'élément sécurisant (18) le long de l'axe de vissage (S), l'écrou de verrouillage (10) étant tordu dans une direction le long du sens de serrage (D1) par rapport à l'élément sécurisant (18), l'écrou de verrouillage (10) et l'élément sécurisant (18) formant des engrenages de verrouillage (20a, 20b) qui s'engagent mutuellement le long du sens de dévissage (D2), dans le sens radial et l'élément sécurisant (18) étant inséré dans l'écrou de verrouillage (10) et ses engrenages de verrouillage (20a) le long de l'axe de vissage (S), l'élément sécurisant (18) étant formé comme anneau sécurisant ouvert dans le sens circonférentiel et élastiquement déformable dans une direction le long du sens de serrage (D1) de telle sorte que l'écrou de verrouillage (10) peut tourner le long du sens de serrage (D1) par rapport à l'élément sécurisant (18), notamment de manière coulissante.

2. Écrou de verrouillage selon la revendication 1,
**caractérisé en ce que**
la partie d'engagement (22) est formée pour interagir avec l'évidement (24) dans l'arbre (14) de telle sorte qu'une fente (34) est formée entre la partie d'engagement (22) et l'évidement (24) dans le sens radial à l'état monté de l'écrou de verrouillage pour permettre une déformation de l'élément sécurisant (18) dans le sens radial.

3. Écrou de verrouillage selon la revendication 1 ou la revendication 2,
**caractérisé en ce que**
la partie d'engagement (22) avec l'évidement (24) forme une connexion de ressort et rainure à l'état monté de l'écrou de verrouillage (10) de telle sorte que la partie d'engagement (22) se rompt lorsque l'écrou de verrouillage (10) est soumis à un couple accru le long du sens de dévissage (D2).

4. Écrou de verrouillage selon l'une quelconque des revendications 1 à 3,
**caractérisé en ce que**
l'élément sécurisant (18) est mobile dans une partie de guidage le long de l'axe de vissage (S) pour alléger un engagement de la partie d'engagement (22) dans l'évidement (24), les engrenages d'écrou (20a, 20b) radiaux ayant une pression de contact minimale pour empêcher une perte d'engrenage.

5. Écrou de verrouillage selon l'une quelconque des revendications 2 à 4,
**caractérisé en ce que**
l'engrenage de verrouillage (20a) de l'écrou de verrouillage (10) et/ou l'engrenage de verrouillage (20b) de l'élément sécurisant (18) ont des profils d'engrenages (21a, 21b) asymétriques qui sont alignés de telle sorte que les premiers profils d'engrenages (21a) plats viennent en butée l'un contre l'autre le long du sens de serrage (D1), notamment pour assurer un glissement unidirectionnel de l'écrou de verrouillage (10) et une déformation élastique de l'élément sécurisant (18), et des deuxièmes profils d'engrenages (21b) raides venant en butée l'un contre l'autre le long du sens de dévissage (D2) afin de verrouiller l'écrou de verrouillage (10) avec l'élément sécurisant (18) dans un sens.

6. Écrou de verrouillage selon la revendication 5,
**caractérisé en ce que**
le premier profil d'engrenages (21a) plat a un rayon de 4 mm à 6 mm, de préférence 5 mm, et/ou une hauteur de flanc (F), notamment d'un premier profil d'engrenages plat droit (21a), de 0,8 mm à 1,2 mm, de préférence 1 mm, dans le sens radial et/ou **en ce que** le deuxième profil d'engrenages (21b) raide a un rayon de 0,4 mm à 0,8 mm, de préférence 0,5 mm à 0,75 mm.

7. Écrou de verrouillage selon l'une quelconque des revendications 2 à 5,
**caractérisé en ce que**
l'engrenage de verrouillage (20a, 20b) a des engrenages dans des sections d'angle de 15° dans la direction circonférentielle, ayant de préférence un nombre d'engrenages entre 22 et 26, particulièrement de préférence 24.

8. Écrou de verrouillage selon l'une quelconque des revendications 1 à 7,
**caractérisé en ce que**
l'écrou de verrouillage (10) monte l'élément sécurisant (18) dans un creux (30) radial intérieur, l'écrou de verrouillage (10) ayant une section déformante (32) frontale, qui maintient l'élément sécurisant (18) le long de l'axe de vissage (S) à l'état déformé, adjacent au creux (30).

9. Écrou de verrouillage selon l'une quelconque des revendications 1 à 8,
**caractérisé en ce que**
l'écrou de verrouillage (10) monte une rondelle de glissement (26) librement rotative le long de l'axe de vissage (S) pour buter contre l'élément de rehaussement (12), notamment dans un montage ajusté à la forme, afin de réduire un coefficient de frottement entre l'écrou de verrouillage et l'élément de rehaussement (12) à l'état monté.

10. Arbre ayant au moins un écrou de verrouillage (10) ayant un élément sécurisant (18) selon l'une quelconque des revendications 1 à 9, l'au moins un écrou de verrouillage étant vissé sur au moins une partie d'arbre fileté (16) de l'arbre et l'arbre formant au moins un évidement, notamment en forme d'une rainure longitudinale, le long de l'axe de vissage (S), l'élément sécurisant s'engageant dans l'évidement avec au moins une partie d'engagement afin de maintenir l'au moins un écrou de verrouillage (10) sur l'arbre (14) le long d'un sens de dévissage (D1) et de caler un élément de rehaussement (12) sur l'arbre (14).
